(19) **Europäisches Patentamt European Patent Office Office européen des brevets**

(11) **EP 4 542 341 A1**

(12) **EUROPEAN PATENT APPLICATION**

(43) Date of publication:
23.04.2025 Bulletin 2025/17

(21) Application number: 23203859.6

(22) Date of filing: 16.10.2023

(51) International Patent Classification (IPC):
*G06F 3/01* (2006.01)  *G06N 5/045* (2023.01)
*G06N 20/00* (2019.01)

(52) Cooperative Patent Classification (CPC):
**G06F 3/017; G06N 5/045; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
• **SEIFI, Sarah**
**81829 München (DE)**
• **CARBONELLI, Cecilia**
**81477 München (DE)**
• **MITTERMAIER, Simon**
**85659 Forstern (DE)**
• **SUKIANTO, Tobias**
**80636 München (DE)**

(74) Representative: **Kraus & Lederer PartGmbB**
**Thomas-Wimmer-Ring 15**
**80539 München (DE)**

(54) **GESTURE CLASS PREDICTION AND EXPLAINABLE ARTIFICIAL INTELLIGENCE**

(57) Techniques of inference of gesture class predictions at edge-deployed devices (131, 132, 133, 134) are disclosed. The gesture class predictions are based on measurement data from radar sensors. A user output can be provided based on feature relevance vectors determined using explainable artificial intelligence. Edge-deployed re-training is disclosed. Techniques of federated learning at a server (139) are disclosed.

**FIG. 4**

**Description**

TECHNICAL FIELD

Various examples of the disclosure generally relate to techniques of explainable artificial intelligence (XAI). Various examples of the disclosure specifically relate to inferring a gesture class prediction from a feature vector and providing a user output to a user based on a feature relevance vector associated with the feature vector, the feature relevance vector being determined based on XAI techniques.

BACKGROUND

Traditional method to determine a gesture class prediction based on measurement data from a sensor such as a radar sensor are based on pretrained machine-learning (ML) models such as neural networks.
Inference can be executed at an edge-deployed processor. "Edge-deployed" means that the processor is not a central server but rather co-deployed with the sensor that acquires the measurement data in the field. For instance, an edge-deployed processor and an edge-deployed radar sensor can be coupled to a common local computing network of a vehicle, for automotive use cases.
According to reference implementations, in a development phase, large measurement campaigns are conducted to build a training dataset that densely samples the entire input space expected in the field (i.e., has good coverage under a wide range of scenarios and users). In the measurement campaign, radar sensors of the same type as those that will later be deployed in the field are used to acquire feature vectors for the training dataset.
To enable training, ground-truth labels are required for the feature vectors. There are various options available for determining the ground-truth labels for the feature vectors in the training dataset. For instance, manual annotation by an expert is an option. Alternatively, or additionally, alternative sensor such as cameras can be used to collect images based on which the ground-truth labels can be reliably determined. This is referred to as supervised learning. Using this labeled training data , the neural network can be trained and then the neural network can be deployed to the edge-deployed processors for inference.
Despite the initial efforts for accurate data collection and labeling in a central training process, performance in the field often degrades due to mismatch between the scenarios considered in training and the real-world deployment.

SUMMARY

Accordingly, a need exists for advanced techniques of using ML models for inferring gesture class predictions based on feature vectors that are determined based on measurement data from sensors such as radar sensors or other depth sensors. A need exists for techniques that mitigate at least some of the above-identified restrictions and drawbacks. A need exists for techniques that enable accurate and reliable gesture class prediction. A need exists for techniques that enable edge-deployed inference.
This need is met by the features of the independent claims. The features of the dependent claims define embodiments.
Hereinafter, techniques are disclosed that enable ML-based inference of gesture class predictions. Edge-deployed inference is disclosed. This means that an edge-deployed processor co-located with a sensor acquiring the measurement data is used for inference. It is not required to communicate data indicative of the measurement data via a wide-area network, e.g., the Internet, to perform the inference. A cellular network is not required for communication of such data. Embedded compute circuitry can be used to implement the edge-deployed processor. In particular, it is not required to employ a central server for the inference.
An ML model is used for inferring a gesture class prediction. Techniques are disclosed which enable to improve the ML model in an edge-deployed re-training. In other words, the edge-deployed processor can execute re-training of the ML model based on a locally acquired training dataset. The disclosed techniques enable maintaining privacy of sensitive user data. This is because measurement data is not provided to a central server.
According to various examples, a user output is determined based on a feature relevance vector. The feature relevance vector is determined for a corresponding feature vector. The feature relevance vector includes multiple dimensions. The dimensions of the feature vector equate to the dimensions of the feature vector. The feature relevance vector includes, for each dimension, a respective feature relevance value. Each feature relevance value is indicative of an importance of one or more feature values of that respective dimension onto the prediction of the ML model. For instance, there may be a one-to-once correspondence between feature relevance vectors and feature vectors; i.e., for each feature vector, there may be one corresponding feature relevance vector. Here, the feature relevance values of that feature relevance vector are indicative of the dependency of the prediction onto the single respective feature value of that feature vector. In such one-to-one relationship, the feature relevance vector is sometimes labeled as "local". In some cases, the feature relevance vector may, however, be associated with multiple feature vectors (then, the feature relevance vector may be referred to as a global feature relevance vector). Here, each feature relevance value is indicative of the (aggregate or overall) dependency of the prediction on a collection of feature values (all of the same dimension, the same dimension as the feature relevance value) of the multiple associated feature vectors.

More generally, the feature relevance vector is accordingly determined using XAI techniques. For instance, the feature relevance vector can include Shapley values, e.g., local or global Shapley values. The feature relevance vector may also be referred to as "XAI vector".

Based on the user output associated with the feature relevance vector multiple effects can be achieved. Firstly, a continued guidance can be provided to the user to provide feedback to the user responsive to the user performing a certain gesture. The feedback can highlight which properties of the gesture - associated with the different dimensions / features of the feature vector - have a significant impact on to the gesture class prediction. Thereby, the user can learn to appropriately execute gestures and thereby interface with the system; i.e., a guided and interactive user training process can be facilitated by the user output. Secondly, it is also possible to populate a training dataset. Based on the user output the user can make an informed decision whether the feature vector associated with the gesture is to be included in a training dataset or not. Thereby, a curated training dataset can be obtained that can help to re-train the ML model to provide more accurate results and to be adapted specifically to the deployment scenario. I.e., the user output can facilitate a re-training process of the ML model. This is particularly helpful for use cases in which the sensor is employed for gesture class prediction of gestures executed by non-expert users, e.g., handsfree automotive infotainment or navigation control, video or audio applications, gaming applications. This enables to populate a user-specific training dataset. Such approaches can enable users with disabilities to compensate for any limitations to execute gestures captured in a certain manner in a predefined training dataset.

As will be appreciated from the above, techniques are disclosed that enable edge-deployed re-training of a machine-learning model based on a training dataset that is populated based on feature vectors acquired in the edge-deployed scene using the edge-deployed sensor. According to various examples, upon re-training the machine-learning model, it would be possible to provide an uplink message that is indicative of weights of the machine-learning model to a central server. The central server can collect respective uplink messages from several respective edge-deployed processors (clients). The central server can then execute techniques of federated learning, to thereby consolidate the sets of weights obtained from the several clients.

Federated learning can be used to consolidate such sets of weights that are obtained from multiple clients to determine an updated set of weights. It would be possible to re-deploy the correspondingly re-trained ML model to the clients upon consolidating. It would be possible to provide a respective downlink message that is indicative of the updated set of weights to the multiple edge-deployed processors that participate in the federated learning. Thereby, a further client can benefit from the edge-deployed re-training executed at another client, while maintaining privacy. In particular, information regarding the executed gestures is not shared amongst clients or the clients and the server. Rather, the sets of weights are shared that only include encoded information regarding the gestures that led to such update of the weights.

A method of operating a processor is disclosed. For example, the processor may be edge-deployed. The method includes obtaining at least one feature vector. The at least one feature vector encodes measurement data. The measurement data is provided by a sensor. For example, the sensor may be a depth sensor, e.g., a radar sensor or a light-detection and ranging (LIDAR) sensor, a time-of flight (TOF) sensor, a radar sensor or a capacitive sensor. For example, the sensor can be edge-deployed. The processor and the sensor may be co-deployed. The measurement data is provided for a gesture that is executed by a user. The method further includes inferring, from the at least one feature vector, a gesture class prediction. Said inferring utilizes a machine-learning model. The gesture class prediction is associated with the gesture that is executed by the user. The method also includes determining at least one feature relevance vector for the at least one feature vector. Each of the at least one feature relevance vector includes feature relevance values. Each of the feature relevance values is indicative of a dependency of the gesture class prediction on a respective one or more feature values of the at least one feature vector. The method also includes determining a user output. The user output is associated with the gesture. The user output is determined based on the at least one feature relevance vector. The method also includes controlling a user interface to provide the user output to the user.

Program code that is executable by a processor is disclosed. The processor may be edge-deployed. Execution of the program code causes the processor to perform a method. The method includes obtaining at least one feature vector. The at least one feature vector encodes measurement data. The measurement data is provided by a sensor. For example, the sensor may be a radar sensor. For example, the sensor can be edge-deployed. The processor and the sensor may be co-deployed. The measurement data is provided for a gesture that is executed by a user. The method further includes inferring, from the at least one feature vector, a gesture class prediction. Said inferring utilizes a machine-learning model. The gesture class prediction is associated with the gesture that is executed by the user. The method also includes determining at least one feature relevance vector for the at least one feature vector. Each of the at least one feature relevance vector includes feature relevance values. Each of the feature relevance values is indicative of a dependency of the gesture class prediction on a respective one or more feature values of the at least one feature vector. The method also includes determining a user output. The user output is associated with the gesture. The user output is determined based on the at least one feature relevance vector. The method also includes controlling a user interface to provide the user output to the user.

A processor is disclosed. The processor is configured to perform a method as disclosed above. Executing the method may be based on program code that is loaded and executed by the processor.

A method of operating a server is disclosed. The server can be a central server, i.e., communicating with multiple clients. The method includes obtaining, from each of multiple processors (e.g., edge-deployed processors), respective uplink messages. Each of the uplink messages is indicative of respective weights of a machine-learning model. The machine-learning model is used, at the processors, to infer gesture class predictions from feature vectors that represent measurement data obtained from sensors. For instance, the measurement data can be obtained from radar sensors. For example, the sensors may be co-deployed with the edge-deployed processors. The method also includes consolidating the weights, to thereby determine updated weights of the machine-learning model. The method also includes providing, to a least one of the multiple edge-deployed processors, a respective downlink message indicative of the updated weights of the machine-learning model.

Program code that is executable by a processor is disclosed. The processor may be edge-deployed. Execution of the program code causes the processor to perform a method of operating a server. The server can be a central server, i.e., communicating with multiple clients. The method includes obtaining, from each of multiple processors (e.g., edge-deployed processors), respective uplink messages. Each of the uplink messages is indicative of respective weights of a machine-learning model. The machine-learning model is used, at the processors, to infer gesture class predictions from feature vectors that represent measurement data obtained from sensors. For instance, the measurement data can be obtained from radar sensors. For example, the sensors may be co-deployed with the edge-deployed processors. The method also includes consolidating the weights, to thereby determine updated weights of the machine-learning model. The method also includes providing, to a least one of the multiple edge-deployed processors, a respective downlink message indicative of the updated weights of the machine-learning model.

A server disclosed. The server is configured to perform a method as disclosed above. Executing the method may be based on program code that is loaded and executed by a processor or multiple processors of the server.

A system including a server as disclosed above and one or more of the processors as disclosed above is disclosed.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a system comprising a radar sensor and a processing device for edge-deployment according to various examples.

FIG. 2 illustrates further details of the radar sensor of FIG. 1 according to various examples.

FIG. 3 schematically illustrates multiple gesture classes for which a gesture class prediction can be inferred using a ML model according to various examples.

FIG. 4 schematically illustrates a system including a central server and multiple edge-deployed devices.

FIG. 5 is a flowchart of a method that may be executed by an edge-deployed processor according to various examples.

FIG. 6 schematically illustrates a time series of local feature relevance values according to various examples.

FIG. 7 schematically illustrates global feature relevance values.

FIG. 8 is a flowchart of a method that may be executed by an edge-deployed processor according to various examples.

FIG. 9 is a flowchart of a method that may be executed by a central server according to various examples.

FIG. 10 is pseudocode of an algorithm according to various examples.

FIG. 11 illustrates feature relevance values (implemented by global Shapley values) for multiple dimensions of a feature vector (features range, Doppler, azimuth, elevation, and peak) obtained from measurements provided by a radar sensor according to various examples, for a non-anomalous gesture.

FIG. 12 generally corresponds to FIG. 11, however illustrates the feature relevance values for an anomalous gesture according to various examples.

FIG. 13 illustrates an order of the feature relevance values for, both, FIG. 11 and FIG. 12.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of analyzing predictions of an ML model are disclosed. Various kinds and types of ML models can benefit from the techniques disclosed herein. Examples include classification tasks performed by a ML model. Examples of ML algorithms include deep neural network, e.g., convolutional neural networks, support vector machines, multilayer perceptrons, etc.

The ML model is used to infer a prediction based on a feature vector. The feature vector encodes measurement data.

The measurement data can be acquired using various measurement modalities and sensors. It would be possible to acquire the measurement data using a depth sensor such as an optical time-of-flight (ToF) sensor, e.g., a time-of-flight camera or a light detection and ranging (LIDAR) sensor. Another type of depth sensor is a radar sensor, e.g., a mm-wave or ultrawideband radar sensor.

A time-of-flight (ToF) camera performs ranging measurements based on the time duration of light pulses travelling to the scene and back. ToF cameras often used light emitting diodes as light sources. LIDAR sensors use laser diodes or lasers as light sources. LIDAR sensors can use ToF ranging or measurement of interference of a continuous wave of primary and a continuous wave of reflected, secondary light. Light sources for ToF cameras and LIDAR are often in the infrared or deep infrared regime. Various techniques disclosed herein will focus on a use case in which the measurement data is acquired using a radar sensor; but similar techniques may also be applied for other types of sensors.

Generally, all depth sensors can provide a feature pertaining to the distance or range of an object. Some depth sensors can provide additional information, e.g., velocity of the object. Depth sensors can have a lateral resolution (i.e., perpendicular to the range direction). This lateral resolution can be obtained by separating respective beam paths (e.g., using a scanning mirror or using multiple separated beam paths altogether) and/or using interference-based beamforming.

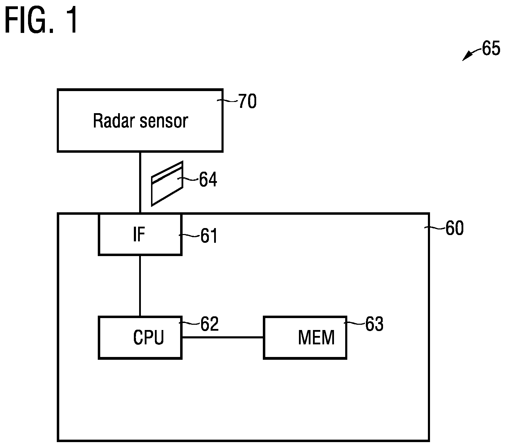

FIG. 1 schematically illustrates a system 65. The system 65 can be edge-deployed. The system 65 includes a sensor 70 and a processing device 60. In the following, the sensor 70 is exemplified in a non-limiting manner as a radar sensor and will be referred to as such, but the sensor 70 may be any sensor, such as a depth sensor. The processing device 60 can obtain measurement data 64 from the radar sensor 70. A processor 62 - e.g., a general purpose processor (central processing unit, CPU), a field-programmable gated array (FPGA), an application-specific integrated circuit (ASIC) - can receive the measurement data 64 via an interface 61 and process the measurement data 64. For instance, the measurement data 64 could include data frames including samples of an analog-to-digital converter. It would also be possible that further pre-processing is implemented at the radar sensor 70; for instance, the radar sensor 70 could output 2-D spectrograms such as a range-doppler spectrogram or an azimuth-elevation spectrogram or a range time spectrogram or a Doppler time spectrogram or an azimuth time spectrogram or an elevation time spectrogram. Based on such pre-processing, a feature vector can be determined that encodes the measurement data.

For instance, a typical feature vector determined based on measurement data of the radar sensor 70 includes one or more of the following dimensions: range of a gesture object; velocity of the gesture object (sometimes also referred to as Doppler shift); angular orientation of the gesture object; azimuthal angle of the gesture object; and elevation angle of the gesture object.

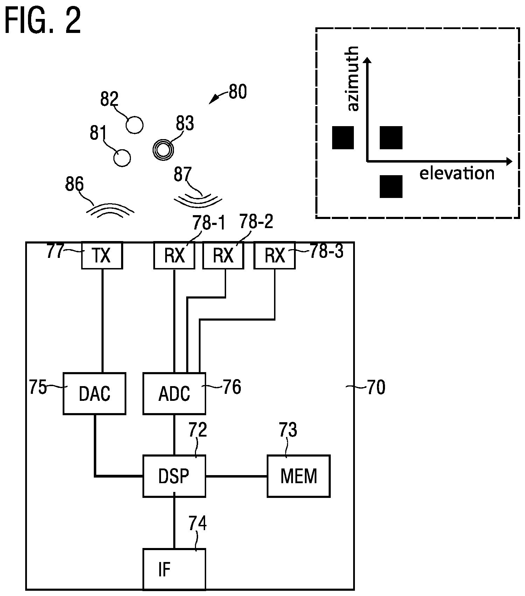

FIG. 2 illustrates aspects with respect to the radar sensor 70. The radar sensor 70 includes a processor 72 (labeled digital signal processor, DSP) that is coupled with a memory 73. Based on program code that is stored in the memory 73, the processor 72 can perform various functions with respect to transmitting radar pulses 86 using a transmit antenna 77 and a digital-to-analog converter (DAC) 75. Once the radar pulses 86 have been reflected by a scene 80, respective reflected radar pulses 87 can be detected by the processor 72 using an ADC 76 and multiple receive antenna 78-1, 78-2, 78-3 (e.g., ordered in a L-shape with half a wavelength distance; see inset of FIG. 2). The processor 72 can process raw data samples obtained from the ADC 76 to some larger or smaller degree. For instance, data frames could be determined and output. Also, spectrograms may be determined.

The radar measurement can be implemented as a basic frequency-modulated continuous wave (FMCW) principle. A frequency chirp can be used to implement the radar pulse 86. A frequency of the chirp can be adjusted between a frequency range of 57 GHz to 64 GHz. The transmitted signal is backscattered and with a time delay corresponding to the distance of the reflecting object captured by all three receiving antennas. The received signal is then mixed with the transmitted signal and afterwards low pass filtered to obtain the intermediate signal. This signal is of significant lower frequency as the transmitted signal and therefore the sampling rate of the ADC 76 can be reduced accordingly. The ADC may work with a sampling frequency of 2 MHz and a 12-bit accuracy.

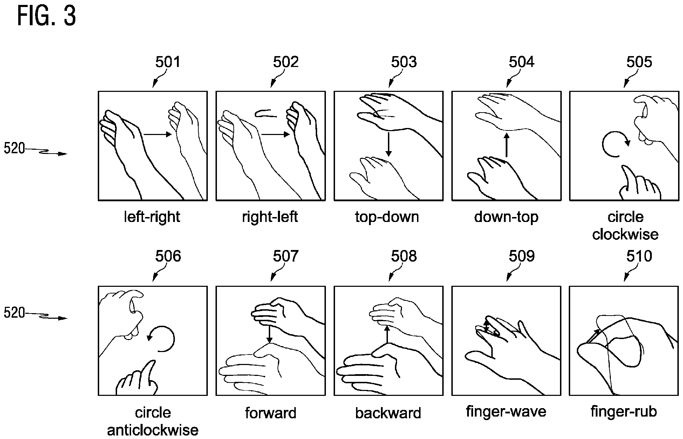

As illustrated, a scene 80 includes multiple objects 81-83. For instance, the objects 81, 82 may correspond to background, whereas the object 83 could pertain to a hand of a user. Based on the radar measurements, gestures performed by the hand can be classified. Some gesture classes between which a discrimination may be possible are illustrated in FIG. 3.

FIG. 3 schematically illustrates such gestures 501-510 and corresponding labels of gesture classes 520, but other gestures are possible. According to the techniques described herein, it is possible to reliably and infer gesture class predictions for such gestures 501-510.

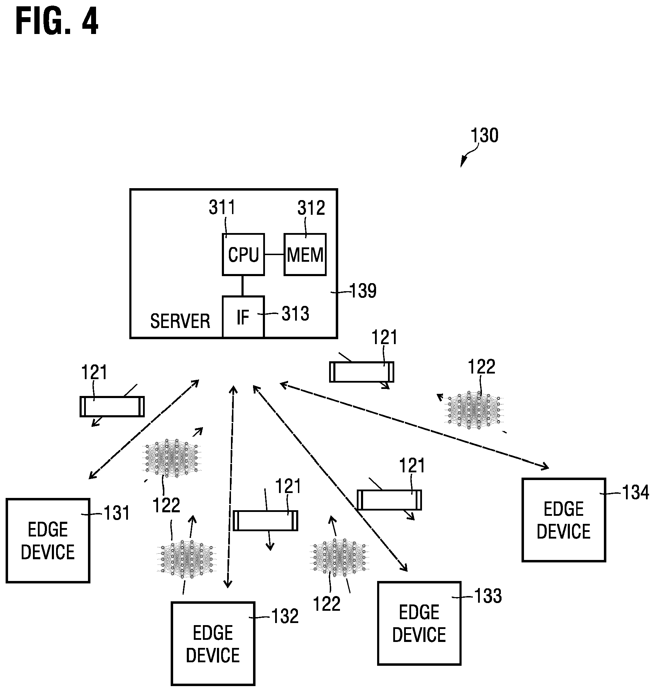

Such gesture class inference can be implemented on an edge-deployed processor such as the processor 62. Nonetheless, also a central server can be part of the overall data handling, as will be explained in connection with FIG. 4.

FIG. 4 schematically illustrates a system 130. The system 130 includes a central server 139. For instance, the central server 139 can be located in a server farm. The central server 139 can be an Internet server that is connected to the Internet.

The central server 139 includes a processor 311 that is coupled to a memory 312. The processor 311 can load program code from the memory 312 and execute the program code to perform techniques as disclosed herein. The processor 311 is also coupled to a communication interface 313. The processor 311 can transmit messages or receive messages via the communication interface. For instance, the server can be coupled to the Internet via the interface 313.

The system 130 also includes multiple edge-deployed devices 131-134 that can also be referred to as clients. The edge-deployed devices 131-134 could be automotive control units (sometimes also referred to as vehicle head unit). The edge-deployed devices 131-134 could be vending machines, e.g., for dispensing train tickets, etc. The edge-deployed devices 131-134 could be gaming consoles.

Each of the edge-deployed devices 131-134 can include a system 65 as illustrated in FIG. 1.

As illustrated in FIG. 4, the edge-deployed devices 131-135 are communicating with the central server 139, e.g., via the Internet. For instance, a cellular radio access technology can be employed.

According to examples, the central server 139 can provide a downlink message that is indicative of a ML model 121 to the edge-deployed devices 131-134. For instance, the downlink message can be indicative of an architecture (e.g., number of layers, skip connections, types of layers, etc.). Then, the ML model 121 can be employed at each one of the multiple edge-deployed devices 131-134 for inferring a gesture class prediction associated with a gesture executed by a respective user based on a feature vector that is encoding locally acquired measurement data.

It is also possible to re-train the ML model 121 at each of the edge-deployed devices 131 based on respective training datasets that are locally populated. In particular, it would be possible to determine a user output that is based on feature relevance vectors at each of the multiple edge-deployed devices 131-134. Such feature relevance vectors can be determined based on XAI methods. Then, based on the feature relevance vectors that are indicated to the user, the user may decide on whether to include or not include respective feature vectors in the training dataset. Thereby, a curated training dataset is obtained that includes tailored feature vectors and associated ground truth gesture classes. Thus, each of the initial version of the ML model 121 can be personalized by edge-deployed re-training at the edge-deployed devices 131-134. Then, uplink messages can be provided by the edge-deployed devices 131-134 to the central server 139, the uplink messages being indicative of weights 122 of the ML model 121 upon completing such re-training. This enables the server 139 to collect such updates from multiple edge-deployed devices and combine or specifically average the respective weights 122 to determine an updated version of the ML model 121. This updated version of the ML model 121 can then be provided to the edge-deployed devices 131-134 in a further iteration. A respective further downlink message may include an update of the weights; it may not be required to signal all parameters of the ML model, e.g., the architecture may be fixed, the number of layers may be fixed, the type of layers may remain unchanged.

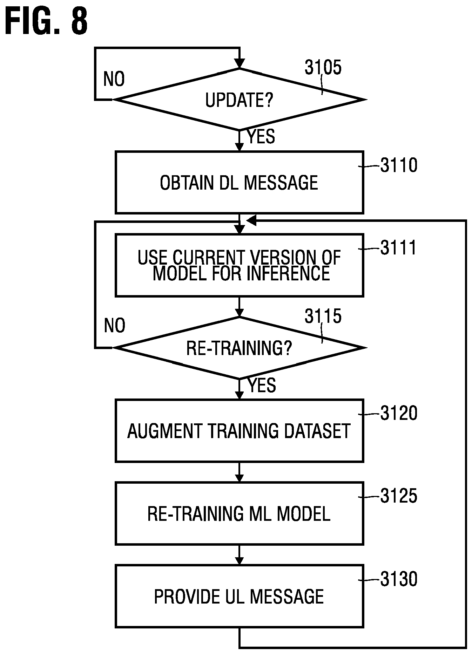

As will be appreciated from the above, techniques of federated learning can be employed. Federated learning facilitates the training of a shared ML model across multiple decentralized clients while ensuring that the training datasets remain distributed and private. Instead of transmitting training data from clients to a central server for training, federated learning allows the ML model to be trained locally on each edge-deployed device, with only the ML model updates (the weights) being sent back to the central server. (Details with respect to federated learning will be explained later in connection with FIG. 8)

As a general rule, various modifications and additions to FIG. 4 are conceivable. For example, in FIG. 4 a scenario has been discussed in which one or more versions of a ML model 121 are provided by the central server 139 to the edge-deployed devices 131-134. It would be optionally possible to provide auxiliary information from the central server 139 to the one or more edge-deployed devices 131-134. Such auxiliary information can, e.g., include information that enables the edge-deployed devices 131-134 to determine whether a certain gesture that is detected and classified is anomalous or non-anomalous. For instance, one or more thresholds such as upper and/or lower thresholds for feature values or feature relevance values or feature vectors or feature relevance vectors can be provided. Alternatively or additionally, reference feature values and/or reference feature relevance values can be provided by the server 139 to the edge-deployed devices 131-134. (Respective techniques will be later on just discussed in further detail in connection with TAB. 2.)

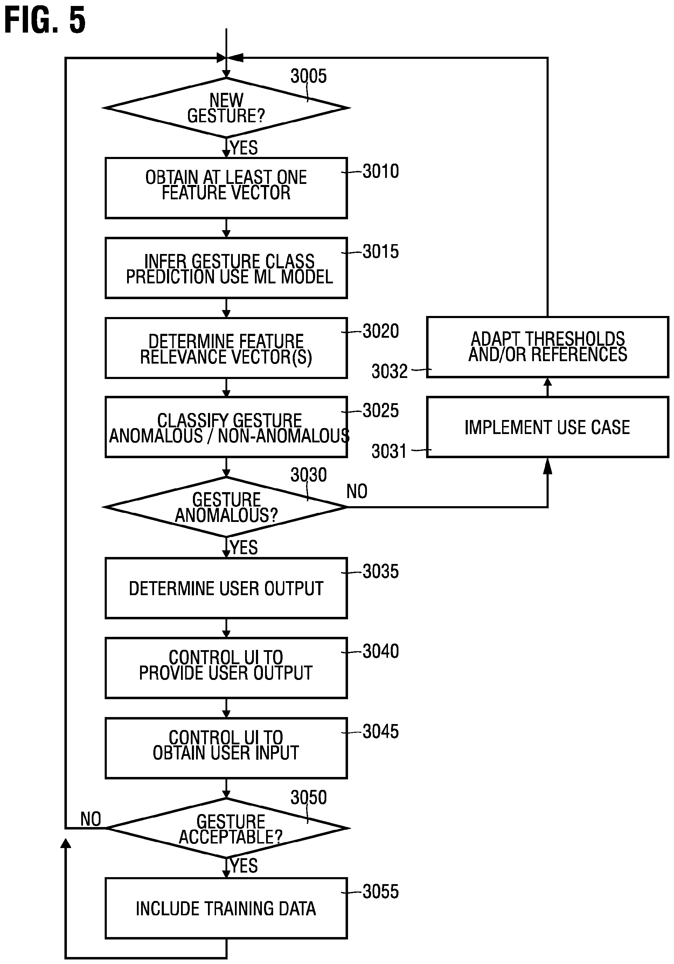

FIG. 5 is a flowchart of a method according to various examples. Fig. 5 generally pertains to XAI methods. FIG. 5 generally relates to implementing user interaction based on information provided by XAI methods.

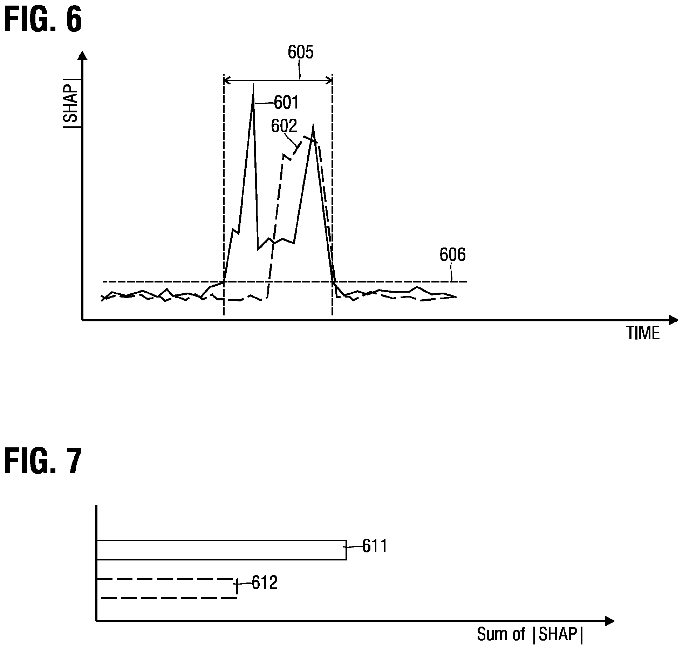

FIG. 6 is a method of operating a processor. For instance, an edge-deployed processor can be operated in accordance with the method of FIG. 5. It would be possible that the method of FIG. 5 is executed by the processor 62 of the processing device 60.

FIG. 5 generally to gesture classification in combination with XAI methods.

At box 3005, it is determined whether a gesture class prediction is to be inferred for a new gesture that is executed by a user. For example, at box 3005, it can be determined whether one or more feature vectors are newly obtained from the pre-processing of radar measurement frames. At box 3005, a gesture detection algorithm can signal that a new gesture is being performed by a user.

If a new gesture class prediction is to be inferred, the method commences at box 3010.

At box 3010, one or more feature vectors are obtained. The one or more feature vectors each include feature values in multiple dimensions. Thus, they describe a certain number of features of the gesture. For instance, each feature vector can include one or multiple dimensions associated with one or more of the following properties of the radar measurement: range, Doppler, azimuth, elevation; peak.

For instance, each feature vector may encode radar measurement data included in one or more data frames obtained from the radar sensor.

Respective techniques of determining feature vectors based on processing radar measurement data are known in the art. The specific implementation of the pre-processing to obtain the feature vectors encoding measurement data obtained from a radar sensor are not germane for the techniques disclosed herein. More specifically, the techniques disclosed herein are able to flexibly handle feature vectors having features associated with different physical observables. For instance, a time-of-flight sensor which may be used as sensor 70 in the stead of a radar sensor may not be able to determine a Doppler shift (as a radar sensor) and, hence, may lack a respective feature. Nonetheless, the techniques disclosed herein can be used to process such feature vectors as well, when inferring a gesture class prediction.

For instance, a time series of multiple feature vectors may be obtained. A gesture is typically executed over an extended duration, e.g., 200 milliseconds to 2 seconds. The multiple feature vectors can sample different positions in such gesture time window.

At box 3015, a gesture class prediction is inferred from the at least one feature vector using an ML model in its current training state.

For example, if multiple feature vectors are obtained at box 3010, these multiple feature vectors can be concatenated and provided as a combined input to the ML model.

The output of box 3015 is an indicator indicative of the gesture class. For instance, an integer value in the range of 1-10 in accordance with TAB. 1 may be output:

TAB. 1: examples of various gesture classes that can be inferred. Also cf. FIG. 3.

| (1) | Swipe left to right |
|---|---|
| (2) | Swipe right to left |
| (3) | Swipe top to down |
| (4) | Swipe down to top |
| (5) | Circle clockwise |
| (6) | Circle anti-clockwise |
| (7) | Swipe back to front |
| (8) | Swipe front to back |
| (9) | Finger wave - wave single fingers |
| (10) | Finger rub - thumb sliding over fingers |

At box 3020, a feature relevance vector is determined. The feature relevance vector is associated with the feature vector obtained at box 3010, as well as with the gesture class prediction inferred at box 3015. The feature relevance vector is indicative of a dependency of the gesture class prediction of box 3015 on the feature values of the feature vector.

A feature relevance vector includes multiple feature relevance values. Each feature relevance value correlates with an associated feature value of the feature vector. The feature relevance values explain the relative contribution of each respective feature value to the prediction of the ML model.

For instance, considering that a given feature value has a higher impact on to the gesture class prediction than another feature value, the respective feature relevance value associated with the given feature value has a higher value than the feature relevance value associated with another feature value.

As a general rule, there are multiple options available for determining the feature relevance values. A multitude of XAI methods are available in the prior art and can be relied upon. See, e.g., Lundberg, Scott M., and Su-In Lee. "A unified approach to interpreting model predictions." Advances in neural information processing systems 30 (2017) - the so-called SHAP method. Shapley values can be calculated. The Shapley value is the average marginal contribution of that feature value to the prediction of the ML model. Shapley values provide the additive influence of each feature value on the specific, local prediction of the ML model. Also see Ribeiro, Marco Tulio, Sameer Singh, and Carlos Guestrin. "Why should i trust you?" Explaining the predictions of any classifier." Proceedings of the 22nd ACM SIGKDD international conference on knowledge discovery and data mining. 2016 - the so-called LIME method.

Shapley XAI method fairly distributes a value among a group of individuals or features, based on their contribution to the overall outcome. The algorithm calculates the average marginal contribution of each feature value across all possible coalitions which are combinations of features being present or absent. See Shapley, Lloyd S. "A value for n-person games." (1953): 307-317. To achieve this, it first generates predictions for different coalitions with and without the analyzed feature, and then takes the difference between those predictions to calculate the marginal contribution of the feature. This process is repeated for all features, and the resulting values are the Shapley values which represent the importance of each feature on the model's prediction. This is defined as:

$$g(z') = \phi_0 + \sum_{j=1}^{M} \phi_j z_j' \qquad (1)$$

with $g$ being the ML model used for the prediction, $z' \in \{0,1\}$ is the coalition vector, $\phi_j \in \Re$ is the Shapley value for a feature $j$, and $M$ is the maximum coalition size.

The SHAP method provides explanations on a local level (local Shapley values) as well as on a global level (global Shapley values). The global Shapley values are obtained by averaging across all absolute local Shapley values used for a certain inference task:

$$I_j = \frac{1}{n} \sum_{i=1}^{n} |\phi_j^i| \qquad (2)$$

with $I_j$ being the global explanation for feature $j$ and $n$ being the number of samples in the dataset. As a general rule, feature relevance (sometimes also referred to as feature importance) can be determined on a local level over time, e.g., by calculating local Shapley values of each gesture frame. Additionally, features with overall little to no influence can be determined by calculating global Shapley values.

As a general rule, it would be possible to determine a single or multiple feature relevance vectors at box 3020.

For instance, it would be possible to determine one or more first feature relevance vectors that includes local Shapley values; and, furthermore, determine a second feature relevance vector that includes global Shapley values.

For instance, if multiple feature vectors are obtained at box 3010 and processed at box 3015, then it would be possible to determine multiple first feature relevance vectors, each of the multiple first feature relevance vectors being associated with a respective one of the multiple feature vectors and including respective local Shapley values. Also, a second feature relevance vectors can be determined that includes the global Shapley values and is determined based on the multiple first feature relevance vectors.

For illustration, FIG. 6 illustrates the time series of the magnitude of the local Shapley values 601, 602 for the features "range" and "Doppler" included in a time series of respective feature values. Also illustrated is a time window 605 associated with the execution of the gesture. Feature values and feature relevance values outside of the time window 605 can be discarded. The time window 605 may be determined based on prior knowledge and/or based on thresholding techniques (a threshold 606 is shown). While FIG. 6 illustrates local Shapley values 601, 602, it would be possible - alternatively or additionally - to calculate global Shapley values. For this, it is possible to aggregate across the time series of feature relevance values within the time window 605. This is illustrated in FIG. 7. FIG. 7 illustrates the sum of all absolute local Shapley values 601 during the time window 605, as well as the sum of all absolute Shapley values 602 during the time window 605; these are the global Shapley values 611, 612.

Now referring again to FIG. 5: At optional box 3025, it is possible to classify the observed gesture as anomalous or non-anomalous. I.e., beyond the classification of the gesture type (box 3015), it is possible to make a binary classification into anomalous and non-anomalous.

As a general rule, various options are available for classifying the gesture as anomalous or non-anomalous in box 3020.

The classification of box 3020 can be based on one or more decision criteria listed in TAB. 2 below:

TAB. 2: Multiple criteria that can be used alone or in combination with each other to determine whether a certain gesture is anomalous or not.

| (1) | the one or more feature relevance vectors of box 3020 |
|---|---|
| (2) | the one or more feature vectors of box 3010 |
| (3) | an uncertainty measure of the gesture class prediction |

Re TAB. 2, example (1) - classifying based on the one or more feature relevance vectors. One or more properties of the feature relevance vector can be taken into account in order to determine whether a gesture is anomalous or not.

For instance, it would be possible to consider a relationship between each of the feature relevance values of the one or more feature relevance vectors and associated thresholds. Such thresholds can be predefined. The thresholds can be defined based on previously determined feature relevance values (as will be later on explained in connection with box 3032). The thresholds can be obtained from a user training process in which the user is asked to perform a certain gesture a certain number of times. The thresholds can be determined based on the respective feature values. The thresholds can be either static or dynamic. Static thresholds are fixedly predefined, e.g., once defined at a central server such as the central server 139 (cf. FIG. 4) and provided to each client (cf. FIG. 4, downlink messages to the edge-deployed devices 131-134). Dynamic thresholds can be determined locally at each of the edge-deployed devices such as the edge-deployed devices 131-134. Different edge-deployed devices then use different thresholds. Such thresholds can be determined based on previous feature relevance value, e.g., by considering a normal range of the feature relevance values. A sliding window can be used to select the previous feature relevance values. I.e., historical feature relevance values can be considered.

Alternatively or instead of using thresholds, it is similarly possible to use reference feature relevance values. Where reference feature relevance values are employed, it is possible to consider a relationship between each of the feature relevance values and reference feature relevance values. It would be possible to consider a distance between the feature relevance vector and one or more predefined feature relevance vectors. Using distance and/or similarity metrics like Euclidean, Manhattan or Mahalanobis distance and Cosine Similarity, it is possible to compare the similarity between a feature relevance value and a reference feature relevance value. The reference feature relevance values can be historical averages, e.g., the averaged feature relevance values of n previous recordings for each gesture class. The reference feature relevance values can be obtained from a user training process in which the user is asked to perform a certain gesture a certain number of times. For instance, ground-truth regarding the gesture class may be available from a user input. Then, the reference feature relevance values can be determined for this gesture class. The amount of dissimilarity or distance between each reference feature relevance value and the associated feature relevance value then serves as a basis to determine whether the gesture is anomalous or non-anomalous.

Alternatively or additionally to thresholding and/or references, it is possible to take into account an order of the feature relevance values with respect to each other. For instance, it can be determined if the order of the feature relevance vectors changed between a nominal order - e.g., determined from previous feature relevance vectors associated with the same gesture class. It would be possible to consider a slope or distance between consecutive feature relevance values in such analysis.

Above, scenarios have been discussed in connection with TAB. 2: example (1). Similar aspects can be likewise applied to TAB. 2: example (2). I.e., alternatively or additionally of using thresholds, references, or an order for feature relevance values, it is possible to use thresholds, references, or an order for feature values. Aspects with dynamic determination and/or static determination as explained above in connection with example (1) are likewise applicable for example (2).

Next, the example (3) of TAB. 2 will be discussed. In a such scenario, said classifying of the gesture as anomalous or non-anomalous is based on an uncertainty measure associated with said inferring at box 3015. Various prior-art solutions are available for determining an uncertainty measure, e.g., Monte-Carlo-Dropout, Evidential Deep Learning, etc. Evidential Deep Learning is described in Sensoy, Murat, Lance Kaplan, and Melih Kandemir. "Evidential deep learning to quantify classification uncertainty." Advances in neural information processing systems 31 (2018). Evidential Deep learning has the advantage to predict uncertainty in a single-pass of the neural network. One specific measure for the uncertainty of the classifying is the probability distribution across multiple candidate gesture classes of the gesture class prediction of the ML model. An output layer of the ML model can include multiple neurons, each neuron being indicative of the probability of a respective gesture class. An example would be a Softmax layer. It is possible to consider the distribution across such output neurons. For instance, if the distribution is even such that many output neurons have similar values and the most likely output class is about the same probability as the other output class, the prediction can be considered uncertain and an anomalous gesture can be considered. On the other hand, if the most probable class has a significantly higher probability than other classes, then the prediction is relatively certain and a non-anomalous gesture can be considered. Such approaches can be based on threshold comparisons of relative deviations between the classification probabilities. The particular technique selected for determining the uncertainty measure is not germane for the functioning.

Summarizing, above techniques have been discussed in connection with TAB. 2 that enable to classify a gesture as anomalous or non-anomalous.

Whether or not the gesture was classified as abnormal in box 3025 is assessed in box 3030. If it is determined at box 3030 that the gesture has not been classified as anomalous at box 3025, the method proceeds to box 3031. At box 3031, a use case is implemented based on the gesture class prediction. For example, a device or machine can be controlled. A user interface can be controlled based on the detected gesture class. For example, a vehicle infotainment system can be controlled based on the gesture class prediction. For example, a vending machine can be controlled based on gesture class prediction. The doors of a car can be opened or closed based on the detected gesture class. Various use cases are conceivable.

Once box 3031 has been completed, the method commences at box 3032. Box 3032 is an optional box. It is optionally possible to adapt one or more thresholds and/or reference for classifying a gesture as anomalous or non-anomalous in a subsequent iteration 3025 based on the recording of the feature vector and/or the feature relevance vector associated with the current gesture. Respective techniques have been discussed above in connection with TAB. 2. For instance, it would be possible at box 3032 to determine whether the current feature values and/or feature relevance values fall below or exceed respective minimum and maximum feature values and/or feature relevance values stored from previous iterations; if this is the case, then the respective current feature value and/or feature reference value may be stored as new minimum or maximum threshold. In a further example, thresholds can be determined based on the 3-Sigma rule: Calculate the mean $\mu$ and the standard deviation $\sigma$ of each feature and gesture class across n global feature relevance value (e.g., global Shapley value) and/or feature value from good recordings. The lower threshold is calculated as $\mu - i^*\sigma$, the upper threshold is calculated as $\mu + i^*\sigma$, with $i \in \{1,2,3\}$. In yet a further example, weighted thresholds can be considered: With this thresholding mechanism, the feature values are considered to determine the thresholds for the feature relevance values. For each gesture class, the feature value ranges of each feature across n previous recordings is extracted. Additionally, for each feature, the mean global Shapley value across n good recordings is calculated. For each feature, it is then possible to weight the feature value range with the mean global Shapley value and use this as lower and upper threshold.

Finally, a further iteration of box 3005 commences. I.e., it is determined whether a new gesture is to be classified.

If, at box 3030, it is determined that the gesture is classified at box 3025 as anomalous, the method commences at box 3035. At box 3035, a user output associated with the gesture is determined. The user output is determined based on the feature relevance vector determined at box 3020.

The user output can be indicative of the feature relevance vector. The user output can be indicative of one or more of the feature relevance values. For instance, the user output could be indicative of an order of the feature relevance values. The user output could be indicative of the order of the feature relevance values, e.g., indicative of an order of global Shapley values (cf. FIG. 7). The user output could be indicative of the features that lead to classification of the gesture as anomalous at box 3025. For example, it would be possible to indicate such feature relevance values that are outside a predefined norm, e.g., fall below or exceed a certain threshold or deviate significantly from a reference.

The same thresholds or references used in box 3025 can also be used here. Such reference or threshold can be determined as discussed in connection with box 3032, i.e., based on historical feature relevance vectors and/or a user training process. Alternatively, the reference or threshold can be fixedly predefined, e.g., configured by the central server. Since different gestures can be associated with different reference feature relevance values and/or different thresholds, it is possible to select the appropriate reference and/or threshold depending on a ground-truth gesture class of the gesture, e.g., input by the user. Accordingly, it would be possible to control the user interface to obtain a user input associated with the user output, the user input being indicative of the ground-truth gesture class of the gesture. To give a concrete example, the user may indicate that a swipe left-right gesture 501 (cf. FIG. 3) was performed. Then, it would be possible to select and load associated upper and lower thresholds for the feature relevance values for multiple dimensions of the feature relevance vector; and compare each feature relevance value with these upper and lower thresholds. It would then be possible to output, to the user, such dimensions of the feature relevance vector that fall below the respective minimum threshold or exceed the respective upper threshold. Alternatively or additionally, it would also be possible to indicate whether certain dimensions of the feature relevance vector are out-of-order. In other words, the left-to-right swipe gesture 501 can be associated with a certain order of the feature relevance values, e.g., from large to small. Whenever this order is broken, a respective indication may be provided by the system to the user.

At box 3040, a user interface is controlled to provide the user output determined at box 3035. For instance, a plot as shown in FIG. 7 can be output.

It would be possible that the user output is provided to the user as part of a re-training process for populating a training dataset for re-training the ML model. In such scenario, the user can be prompted with certain properties of the gesture presently performed; this enables the user to reflect whether the gesture has been appropriately executed and whether the gesture is to be included in a training dataset. This enables to obtain a curated training dataset in which non-relevant or non-significant gestures are excluded. Accordingly, at box 3050, it can be judged whether the gesture has been appropriately executed. Only in the affirmative, the feature value associated with the gesture as well as an associated ground-truth gesture class of the gesture is added to the training dataset. For this, the user interface can be controlled to obtain a user input. The user input can be associated with the user output provided at box 3045. The user input can be indicative of a ground-truth gesture class of the gesture. In other words, the user can indicate which type of gesture was performed previously. The user can also indicate whether - based on the user output provided at box 3045 - the gesture has been accurately executed. The user input can positively or negatively acknowledge the gesture. Only in the affirmative, the feature vector is included in the training dataset.

FIG. 5 is an example flowchart and various modifications are possible. For instance, it would be possible that - at box 3030 - the criterion for determining whether a certain gesture is an anomalous does not depend on feature relevance values (cf. TAB. 2: examples 2 or 3). In such a scenario, it would be possible that box 3020 is executed only after determining, at box 3030, that a gesture is anomalous. I.e., box 3030 can precede box 3020.

For further illustration, it would be possible that the decision criterion for classifying a gesture as an anomalous at box 3025 depends on a user input. For example, a user may input references or thresholds. In such a scenario, box 3025 may be preceded by controlling the user interface to obtain a respective user input.

For still further illustration, above, a scenario has been disclosed in which the user output is provided to the user as part of a re-training process for re-training the ML model. It would be alternatively or additionally possible to provide the user output as part of a guided and interactive user training process. For instance, in such a guided and interactive user training process, the user can be prompted to perform gestures of a certain class. Responsive to such a prompt, the user performs the respective gesture and then obtains, as part of box 3040, a respective information on the one or more dimensions of the feature vector that have associated feature relevance values deviating from the associated reference, e.g., in case the gesture is anomalous. In such scenario, the ground-truth gesture class is inherently available, because the user is prompted to perform a certain gesture. The guided and interactive training process helps the user to re-execute the gesture in a more appropriate manner, by adapting the particular characteristic of the gesture associated with that dimension or those dimensions deviating from the reference. For instance, it could be indicated to the user that, in particular, the velocity/Doppler dimension is deviating from the velocity/Doppler reference for the gesture "swipe left-right". Then, the user can re-execute that gesture, leaving everything as in the previous try, however, with the exception of the speed of the movement; the user may move the hand faster or slower, depending on whether the predefined reference has been exceeded. This helps to train the user to perform better gestures. For instance, unclean gesture trajectories (i.e. shaky movements) can be flagged and corrected by the user. Wrong angles and distances to the radar can be flagged and corrected by the user. Inappropriate gesture execution speed can be identified. Inadequate radial gesture execution can be identified.

Above, aspects of XAI-supported re-training of the ML model and/or user training to correctly execute gestures have been disclosed. The initial version of the ML model may be provided by a central server. Also, updated of the ML model may be provided by the central server. This is discussed next in connection with FIG. 8.

FIG. 8 is a flowchart of a method according to various examples. The method of FIG. 16 can be executed by an edge-deployed device such as one of the edge-deployed devices 131-134 illustrated in FIG. 4. The method of FIG. 4 can be, in particular, executed by an edge-deployed processor, e.g., by the processor 62 upon loading and executing program code stored in the memory 63.

The method of Fig. 8 generally pertains to updates of weights of the ML model being exchanged bi-directionally between the edge-deployed device and a central server.

At box 3105, it is determined whether a new version of an ML model is available. For instance, it would be possible to determine that an over-the-air-update procedure of the edge-deployed device hence. An update procedure of a software or firmware of the edge-deployed device can be triggered. For instance, it would be possible that the processor executing the method of FIG. 8 is part of an automotive control unit (sometimes also referred to as vehicle head unit). Here, it can be judged that an update procedure (e.g., over-the-air update) of the vehicle control processor has commenced.

If, at box 3105, it is judged that an update is available, the method commences at box 3110.

At box 3110, a downlink message is obtained from a central server. The downlink message is indicative of a weights of the ML model in the current training state/version. Thus, an update of the ML model is obtained. Techniques with respect to such a downlink message providing a current version of the ML model have been discussed in connection with FIG. 4: ML model 121.

It would be possible that the DL message is encrypted. For instance, an asymmetric encryption using a private-public key pair can be used. And end-to-end encryption may be used.

Obtaining the ML model in its current training state at box 3110 can include a registration of the respective edge-deployed device at the central server and a download request being transmitted from the edge-deployed device to the central server. Obtaining the downlink message at box 3110 can include receiving the downlink message via a wireless carrier of a cellular network. Obtaining the downlink message at box 3110 can include obtaining the downlink message via the Internet.

Then, at box 3111, the updated ML model can be used for inference, i.e., for inferring gesture class predictions. This can involve execution of the method discussed in connection with FIG. 5. As part of box 3111, it is possible to populate a training dataset based on feature vectors observed during the inference. Respective techniques have been previously discussed in connection with box 3055 in FIG. 5.

At box 3115, it is judged whether a re-training of the ML model is required and/or authorized and/or possible. For instance, at box 3115, it can be checked whether the central server providing the update at box 3110 has enabled or disabled edge-deployed re-training of the ML model. Alternatively or additionally, at box 3115, it can be determined whether the training dataset that is populated in box 3111 has reached a certain size. Re-training may only be possible if sufficient training data is available. If re-training is to be executed, the method commences at box 3120.

At box 3120, it is optionally possible to augment the training dataset. Augmenting the training dataset can include one or more of the following: Gaussian noise injection, time warping, drifting.

Data augmentation relates to increasing the size of a training dataset without acquiring further measurements. By making slight modifications to the original data, new training samples can be generated. Augmented data provides a kind of regularization, reducing the chances of overfitting.

Gaussian Noise Injection includes the addition of random noise that follows a Gaussian distribution to the data. In the context feature relevance vectors of radar measurements, this includes random variations of each feature value such as range, Doppler, angle dimensions, etc.. By adding this kind of noise, the ML model is trained to be more robust against minor distortions or interference, leading to better generalization to real-world, noisy scenarios. Time Warping pertains to stretching or compressing the time axis of a sequence of feature relevance vectors (cf. FIG. 6). Drifting refers to the introduction of slight changes in the feature values over time, simulating scenarios where systematic changes in the sensor readings are observed.

At box 3125, the re-training of the ML model is executed. Prior art techniques for such re-training can be employed.

Various losses can be considered in box 3125. One example loss is the supervised loss (for data samples with labels) that can be denoted as follows:

$$\mathcal{L}_S = -\frac{1}{N} \sum_{i=1}^{N} \sum_{c=1}^{C} y_{i,c} \log(\hat{p}_{i,c})$$

$$(3)$$

Here N is the number of labeled samples (i.e., feature vectors), in the training dataset. C is the number of classes in the classification problem, i.e., the number of gesture classes. $y_{i,c}$ is the ground truth label for sample I and class c. It represents whether sample i belongs to class c (1 if True, 0 otherwise). This may be obtained from the user. $\hat{p}_{i,c}$ is the predicted probability of sample I belonging to class c. It is the output of the model's softmax function, representing the model's confidence in the predicted class probabilities. The particular training technique and specifically the particular loss employed is, however, not germane.

Upon completion of the re-training, it is then possible, at box 3130, to provide an UL message to the central server, the UL message being indicative of the weights of the ML model upon completion of the re-training. For instance, an incremental update can be signaled, that is restricted to changes of the weights if compared to the earlier training sate, e.g., as provided in the DL message at box 3110. This can include gradient updates. As previously explained in connection with box 3110, box 3130 may be executed as part of an over-the-air update procedure.

It would be possible that the UL message is encrypted. For instance, an asymmetric encryption using a private-public key pair can be used. And end-to-end encryption may be used.

Summarizing, in connection with FIG. 8, techniques of re-training at the edge have been disclosed. The techniques enable to diminish the effect of background movements (by re-training the model to ignore them), adapt the ML model to potential disabilities of the user, and adapt the ML model to function with different hand sizes and handedness.

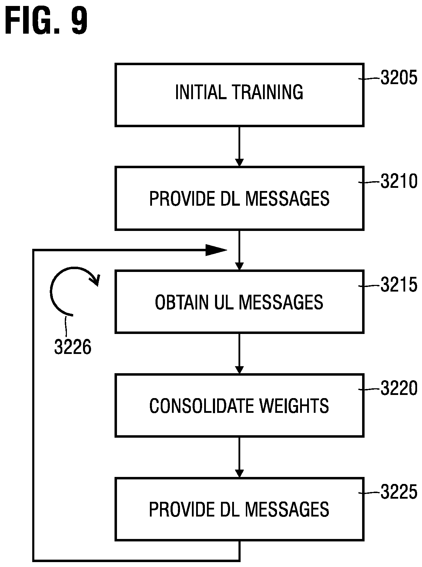

The uplink and downlink updates of the ML model (cf. box 3110, box 3130) can enable federated learning of the ML model. This is explained next in connection with FIG. 9.

FIG. 9 is a flowchart of a method according to various examples. FIG. 9 generally relates to federated learning. FIG. 9 is inter-related with FIG. 8.

The method of FIG. 9 can be executed by a central server, e.g., the central server 139 of the scenario of FIG. 4. More precisely, it would be possible that the method of FIG. 9 is executed by the processor 311 of the server 139 upon loading program code from the memory 312 and upon executing that program code.

At box 3205 an initial version of the ML model is trained. This can be based on a relatively large training dataset obtained in a coordinated measurement campaign.

Then, at box 3210, the initial version of the ML model is distributed to a plurality of edge-deployed devices. The central server may provide respective DL messages. Box 3210 is inter-related with box 3110.

The edge-deployed devices can then use this initial version of the ML model for inference. They may also locally re-train the ML model and provide, at box 3215 respective UL messages indicative of an updated weights. This can include gradient updates. The server can collect these updates and, at box 3220, consolidate the sets of weights obtained from the multiple edge-deployed devices. This is referred to as federated learning. A re-training can be executed. It is possible to include data augmentation, as previously discussed for the edge-side at box 3120.

At box 3225, the server can provide DL messages to the edge-deployed devices indicative of the new version of the ML model thus obtained. The updated weights can be signaled. A further iteration 3226 can then commence. Such federated learning based on the consolidation of ML models retrained at multiple clients enables the ML model improve over time, incorporating knowledge from different edge-deployed devices.

Federated learning offers several advantages. Firstly, it prioritizes privacy by ensuring that the training data remains on the edge-deployed devices and is not directly shared with the central server or other edge-deployed devices. This is particularly valuable in situations involving sensitive or personal data. Secondly, federated learning allows data to stay on edge-deployed devices, reducing the need for transferring large amounts of data to a central location. This is beneficial in scenarios where network bandwidth is limited or transferring data is costly. Additionally, federated learning reduces the communication overhead by exchanging only model updates instead of raw data, making it suitable for devices with limited bandwidth or unstable connections. Furthermore, federated learning leverages the computational resources of multiple devices, enabling faster training and scalability. It facilitates training on a large number of devices simultaneously, potentially resulting in a more diverse and representative dataset. Lastly, federated learning improves the generalization performance of the trained model by leveraging data from multiple devices, capturing a wider range of patterns and reducing the risk of overfitting to a specific device's data. Federated learning is particularly valuable in applications where data privacy and security are of utmost importance, such as healthcare, finance, or Internet of Things (IoT) scenarios involving sensitive data. By keeping the data local and distributed, federated learning addresses privacy concerns while enabling collaborative model training across decentralized devices or servers.

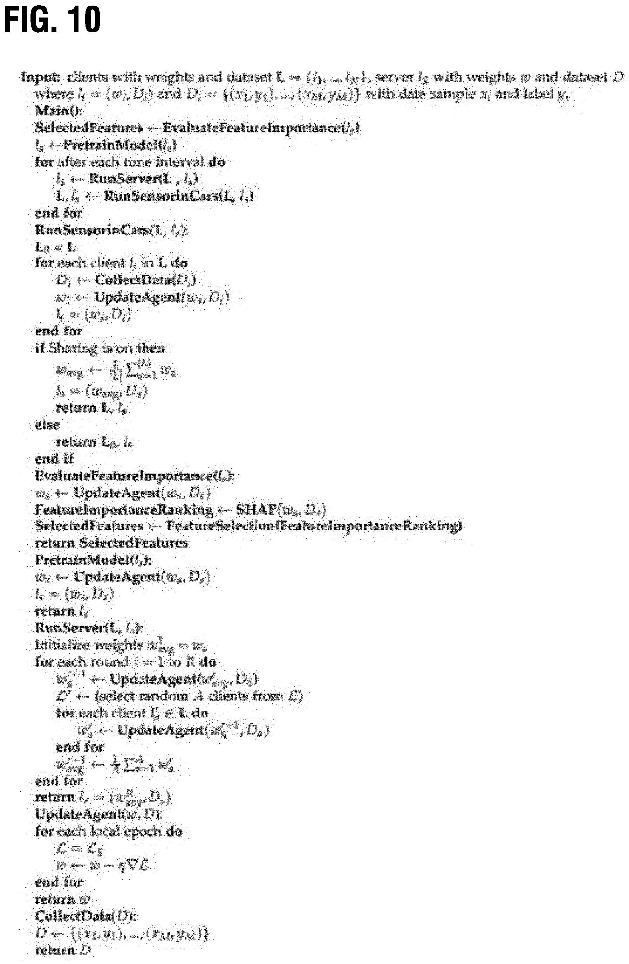

FIG. 10 is pseudocode of an algorithm implementing the techniques discussed above. The algorithm can implement the methods of FIGs. 5, 8, and 9.

The provided pseudocode outlines an algorithm called "Radar SHAP explanation" for a Federated Learning setting. The algorithm assumes the existence of clients represented by a dataset $L$, where each client $l_i$ comprises weights $w_i$ and a dataset $D_i$. There is also a central server $l_S$ with weights w and a dataset D. The goal is to perform Federated Learning to train an ML model using the data from the clients while preserving privacy.

The algorithm starts with the "Main()" function: It initializes the "SelectedFeatures" variable by evaluating the feature relevance vector using the "EvaluateFeatureImportance()" function on the server. It pretrains the ML model on the server using the "PretrainModel()" function, cf. box 3205.

The algorithm then enters a loop, executing the following steps after each time interval: It runs the server using the "RunServer()" function, which updates the server weights based on the average of the client weights, cf. box 3220. Also, it runs the "RunSensorinCars()" function.

The "RunSensorinCars()" function performs the following steps for each client: Collects data using the "CollectData()" function (cf box 3215) and additionally augments data using e.g. Gaussian noise injection, time warping, drifting, etc. Updates the client agent weights using the "UpdateAgent()" function. Updates the client $l_i$ with the new weights $w_i$ and data $D_i$.

If sharing is enabled, the algorithm calculates the average weights of all clients and updates the server with the averaged weights (cf. box 3220). Otherwise, it keeps the original client weights.

The "RunSensorinCars()" function: Initializes a copy of the client dataset as $L_0$ (cf. box 3110). For each client $l_i$ in L, it performs the following steps:Collects data using the "CollectData()" function. Feature relevance vectors are determined. Updates the client agent weights using the "UpdateAgent()" function. Updates the client $l_i$ with the new weights $w_i$ and data $D_i$.

If sharing is enabled, it calculates the average weights across all clients and updates the server with the averaged weights. Otherwise, it returns the original client dataset and server weights.

The "EvaluateFeatureImportance()" function: Updates the server weights using the "UpdateAgent()" function. Calculates the feature relevance value ranking using the SHAP method (or another XAI method) on the server dataset $D_s$. Performs feature selection based on the feature importance ranking and returns the selected features.

The "PretrainModel()" function: Updates the server weights using the "UpdateAgent()" function. Returns the server $l_S$ with the updated weights.

The "RunServer(")" function: Initializes the weights $W_{avg}^1$ as the server weights $w_S$. Executes the following steps for each round i (up to a maximum of R rounds): Updates the server weights $w_S^{r+1}$ using the "UpdateAgent()" function on the server dataset $D_S$. Selects a random set of A clients from L as $L_r$. For each client $l_a^r$ in L, it updates the client weights $w_a^r$ using the "UpdateAgent()" function. Calculates the average of the client weights as $W_{avg}^{r+1}$. Returns the updated server $l_S$ with the final weights $W_{avg}^R$.

The "UpdateAgent()" function: It performs local training epochs for the agent with weights w. In each local epoch, it updates the weights w by subtracting the learning rate eta multiplied by the gradient of the loss L.

The "CollectData()" function: It collects the data D for a client, which includes of a set of data samples $(x_i, y_i)$.

The algorithm of FIG. 10 operates by iteratively running the server and client updates. The server aggregates the client weights and updates its own weights based on the averaged weights (cf. Fig. 9). The clients collect data, update their weights and potentially share their weights with the server (cf. Fig. 8).

The algorithm of Fig. 10 also includes functions for evaluating feature importance, pretraining the ML model on the server, and updating agent weights using a local training (cf. box 3125) .

The pseudocode assumes the existence of other functions such as the SHAP method for feature relevance ranking and a feature selection algorithm, which are not explicitly defined in the provided pseudocode, but known in the art.

Overall, the algorithm of Fig. 10 aims to perform federated learning where clients contribute their local data while preserving privacy, and the server coordinates the aggregation of client updates to improve the model's performance.

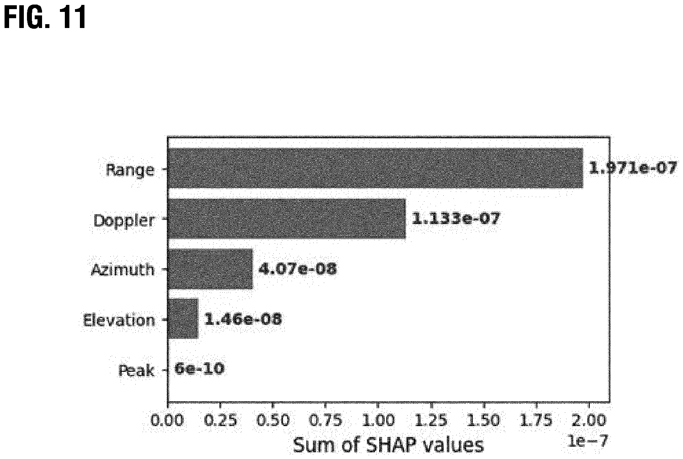

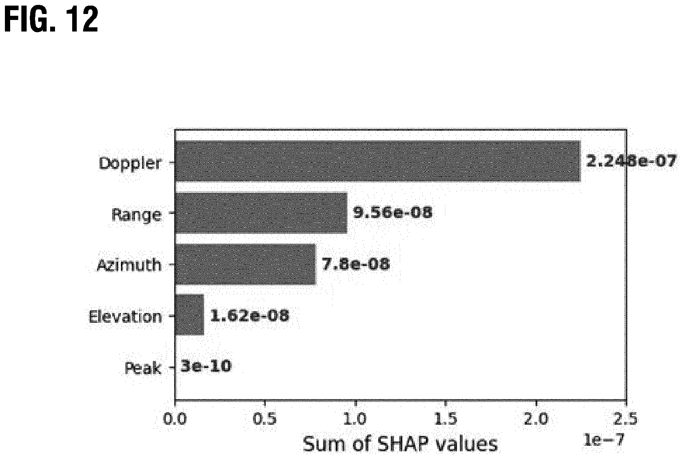

FIG. 11 and FIG. 12 show exemplary results of the algorithm of FIG. 10 of an anomalous gesture using the techniques disclosed herein. As explained in connection with TAB. 2, there are various ways how an anomalous gesture can be characterized. In FIG. 11 and FIG. 12, the minimum and maximum thresholding mechanism based on the Shapley values of n good gestures, with n=20, is selected. I.e., a dynamic threshold using a sliding window is employed in which the threshold is adapted (cf. box 3032). For a sufficient statistical representation during deployment, n may be increased, e.g., to n=100.

FIG. 11 and FIG. 12 show the global Shapley values (cf. FIG. 7) obtained for the gesture 501 (swipe left to right; cf. FIG. 3) in a normal pace (FIG. 11) vs. in a fast pace (FIG. 12). The gesture in FIG. 11 was correctly detected but in FIG. 12, the gesture remained undetected. In this scenario of FIG. 12 it is helpful to use the feature relevance vector including global Shapley values for the dimensions "Doppler", "range", "azimuth", "elevation", and "peak" to understand the underlying reason of the misprediction. In nominal gestures as shown in Fig. 11, the feature "range" has the highest influence followed by "Doppler"; then, depending on whether either SwipeLeft/Right (gesture 501) or SwipeUp/Down (gesture 503) was executed, either "azimuth" (horizontal angle) follows in the order, or "elevation" (vertical angle). The feature "peak" (signal magnitude) had barely an influence which is in indicator that it doesn't contribute towards the ML model output (and may even be omitted in future iterations). In further detail: "Peak" stands for the signal magnitude of the maximum signal in the doppler profile. After obtaining the range profile, Fast Fourier Transforms across all receive channels are performed. After integrating the resulting Doppler Profile across the channels, the maximum signal is searched. The position indicates the radial velocity, whereas the amplitude is the signal magnitude.

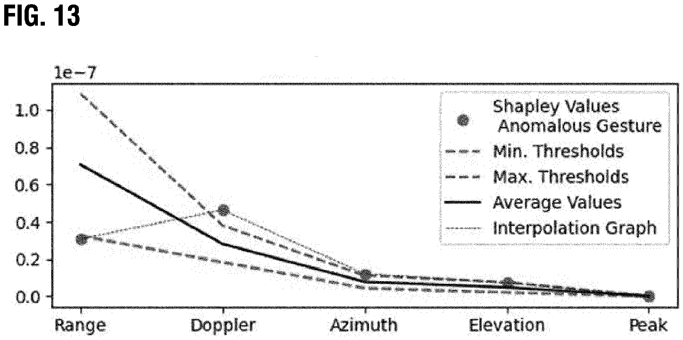

When now comparing the two global feature rankings of the non-anomalous (FIG. 11) and the anomalous (FIG. 12) gesture, it can be seen that the "Doppler" feature has a higher influence than the nominal one. Since the user was asked to provide feedback regarding the actual gesture class (user input indicative of the ground-truth label), it is possible to choose the correct Shapley reference values (upper and lower threshold based on gesture class 501). Using the thresholding mechanism and the interpolated median graph based on nominal gestures as shown in FIG. 11, it can be seen from FIG. 13 (full line) that the slope between the range and the doppler feature should nominally be negative, since the range feature has the highest impact on the model output. This is not the case for the anomalous gesture of FIG. 12 (dotted line). Therefore, it is then possible to provide a user output (cf. box 3040) indicative of the velocity being the factor preventing the detection of the gesture (it significantly influenced the ML model output anomalously) and it requires adjustment. This user output can also be broken down even more, e.g., by including the typical behavior of fast vs. very slow gestures. By comparing the typical Shapley value behavior of a fast vs. a slow gesture, it is possible to directly give feedback to the user that not only was the velocity the reason for the wrong predictions, but the hand was moved too fast.

Summarizing, techniques have been disclosed the enable to increase accuracy of an ML model for gesture class prediction based on (i) XAI and/or (ii) federated learning. A decision process is disclosed for identifying and characterizing anomalous gesture predictions. For example reference feature relevance values, e.g., collected from the average ML model, predefined at a central server, or dynamically determined, and the user specific recordings can be used to characterize anomalous gestures compared to nominal ones. There are several options on how to describe the discrepancy between well performed and anomalous gestures. These options include defining static or dynamic thresholds: Upper and lower thresholds based on the feature relevance vector calculations of nominal gestures are defined that determine an acceptable value range for each feature relevance value. Based on these thresholds, the possible underlying cause of the anomalous gesture can be characterized. Alternatively or additionally, it is possible to use similarity metrics, e.g. Euclidean Distance or Cosine Similarity. Techniques have been disclosed that enable providing the user with an indication of how to repeat the gesture for a more judicious recalibration procedure.

Summarizing, at least the following EXAMPLES have been disclosed.

EXAMPLE 1. A method of operating an edge-deployed processor (62), the method comprising:

- obtaining (3010) at least one feature vector that encodes measurement data (64) provided by a depth sensor (70) for a gesture (501-510) executed by a user,
- using a machine-learning model (121), inferring (3015), from the at least one the feature vector, a gesture class prediction associated with the gesture,
- determining (3020) at least one feature relevance vector for the at least one feature vector, each of the at least one feature relevance vector comprising feature relevance values, each of the feature relevance values being indicative of a dependency of the gesture class prediction on respective one or more feature values of the at least one feature vector,
- determining (3035) a user output associated with the gesture based on the at least one feature relevance vector, and
- controlling (3040) a user interface to provide the user output to the user.

EXAMPLE 2. The method of EXAMPLE 1, further comprising:

- classifying the gesture as anomalous or non-anomalous,

wherein the user output is selectively provided to the user responsive to classifying the gesture as anomalous.

EXAMPLE 3. The method of EXAMPLE 2, wherein said classifying of the gesture as anomalous or non-anomalous is based on the at least one feature relevance vector.

EXAMPLE 4. The method of EXAMPLE 3, wherein said classifying of the gesture as anomalous or non-anomalous is based on a threshold comparison between each of the feature relevance values of the at least one feature relevance vector and respective thresholds.

EXAMPLE 5. The method of EXAMPLE 4, wherein the thresholds are determined based on previously determined feature relevance values or are obtained from a central server or are fixedly predefined.

EXAMPLE 6. The method of any one of EXAMPLEs 2 to 5, wherein said classifying of the gesture as anomalous or non-anomalous is based on a comparison between each of the feature relevance values of the at least one feature relevance vector and respective reference feature relevance values.

EXAMPLE 7. The method of EXAMPLE 6, wherein the reference feature relevance values are determined based on previously determined feature relevance values or are obtained from a central server or are fixedly predefined.

EXAMPLE 8. The method of any one of EXAMPLEs 2 to 7,
wherein said classifying of the gesture as anomalous or non-anomalous is based on an order of the feature relevance values.

EXAMPLE 9. The method of any one of EXAMPLEs 2 to 8,
wherein said classifying of the gesture as anomalous or non-anomalous is based on an uncertainty measure associated with said inferring of the gesture class prediction using the machine-learning model.

EXAMPLE 10. The method of EXAMPLE 9,
wherein the uncertainty measure is determined based on a probability distribution across multiple candidate gesture classes of the gesture class prediction.

EXAMPLE 11. The method of any one of EXAMPLEs 2 to 10,
wherein said classifying of the gesture as anomalous or non-anomalous is based on a distance of the at least one feature vector to one or more predefined reference feature vectors.

EXAMPLE 12. The method of EXAMPLE 11,
wherein the one or more predefined reference feature vectors are determined based on previously obtained feature vectors or are obtained from a central server or are fixedly predefined.

EXAMPLE 13. The method of any one of EXAMPLEs 2 to 12,
wherein said classifying of the gesture as anomalous or non-anomalous is based on a threshold comparison between each of the feature values of the at least one feature vector and respective thresholds.

EXAMPLE 14. The method of EXAMPLE 13,
wherein the thresholds are determined based on previously obtained feature values or are obtained from a central server or are fixedly predefined.

EXAMPLE 15. The method of any one of the preceding EXAMPLEs,
wherein the user output is provided to the user as part of a re-training process for populating a training dataset for re-training the machine-learning model.

EXAMPLE 16. The method of any one of the preceding EXAMPLEs,
wherein the user output is provided to the user as part of a guided and interactive user training process.

EXAMPLE 17. The method of any one of the preceding EXAMPLEs, further comprising:

- controlling the user interface to obtain a user input associated with the user output,
- based on the user input, selectively including the at least one feature vector in a training dataset, and
- re-training the machine-learning model based on the training dataset, to thereby obtain the machine-learning model.

EXAMPLE 18. The method of EXAMPLE 17,
wherein the user input is indicative of a ground-truth gesture class of the gesture.

EXAMPLE 19. The method of EXAMPLE 17 or 18,
wherein the user input positively or negatively acknowledges the gesture.

EXAMPLE 20. The method of any one of EXAMPLEs 17 to 19, further comprising:

- providing (3130) an uplink message to a central server (139), the uplink message being indicative of weights (122) of the machine-learning model upon completing said re-training.

EXAMPLE 21. The method of EXAMPLE 20,
wherein the uplink message is indicative of an incremental update of the weights of the machine-learning model if compared to an earlier training state of the machine-learning model.

EXAMPLE 22. The method of EXAMPLE 20 or 21,

wherein processor is part of an automotive control unit,
wherein the uplink message is provided in an over-the-air-update procedure of the automotive control unit.

EXAMPLE 23. The method of any one of EXAMPLEs 17 to 22, further comprising:

- prior to performing said re-training of the machine-learning model, augmenting the training dataset based on one or more of: noise injection; time warping; and drifting.

EXAMPLE 24. The method of any one of the preceding

EXAMPLEs,
wherein the user output is indicative of one or more feature values of the at least one feature vector that are associated with feature relevance values that deviate from a predefined reference and/or exceed or fall below a predefined threshold.

EXAMPLE 25. The method of EXAMPLE 24,
wherein the predefined reference and/or the predefined threshold are determined based on previously determined feature relevance vectors.

EXAMPLE 26. The method of EXAMPLE 25,
wherein the predefined reference and/or the predefined threshold is fixedly predefined.

EXAMPLE 27. The method of any one of EXAMPLE 25,
wherein the predefined reference and/or the predefined threshold is obtained from a central server (139).

EXAMPLE 28. The method of any one of EXAMPLEs 24 to 27, further comprising:

- selecting the predefined reference and/or the predefined threshold depending on a ground-truth gesture class of the gesture.

EXAMPLE 29. The method of EXAMPLE 28, further comprising:

- controlling the user interface to obtain a user input associated with the user output, the user input being indicative of the ground-truth gesture class of the gesture.

EXAMPLE 30. The method of any one of the preceding EXAMPLEs,
wherein the at least one feature vector comprises feature values in one or more of the following dimensions: range of a gesture object; velocity of the gesture object; angular orientation of the gesture object; azimuthal angle of the gesture object; and elevation angle of the gesture object.

EXAMPLE 31. The method of any one of the preceding EXAMPLEs,
wherein the at least one feature vector comprises a time series of multiple feature vectors.

EXAMPLE 32. The method of any one of the preceding EXAMPLEs, further comprising:

- obtaining (3110), from a central server (139), a downlink message indicative of weights of the machine-learning model prior to said inferring.

EXAMPLE 33. The method of EXAMPLE 32,

wherein processor is part of an automotive control unit,
wherein the downlink message is obtained in an over-the-air-update procedure of the automotive control unit.

EXAMPLE 34. The method of any one of the preceding EXAMPLEs,

wherein the at least one feature vector comprises a time series of multiple feature vectors,
wherein the at least one feature relevance vector comprises a global feature relevance vector,
wherein the feature relevance values of the global feature relevance vector are indicative of a dependency of the gesture class prediction on the respective feature values included the multiple feature vectors.

EXAMPLE 35. The method of any one of the preceding EXAMPLEs,

wherein the at least one feature vector comprises a time series of multiple feature vectors,
wherein the at least one feature relevance vector comprises multiple local feature relevance vectors, each of the multiple local feature relevance vectors being associated with a respective one of the multiple feature vectors.

EXAMPLE 36. A method of operating a central server (139), the method comprising:

- obtaining, from each of multiple edge-deployed processors, respective uplink messages, each of the uplink messages being indicative of respective weights of a machine-learning model, the machine-learning model being used, at the edge-deployed processors, to infer gesture class predictions from feature vectors that represent measurement data obtained from depth sensors,
- consolidating the weights, to determine updated weights of the machine-learning model, and
- providing, to at least one of the multiple edge-deployed processors, a respective downlink message indicative of the updated weights of the machine-learning model.

EXAMPLE 37. The method of EXAMPLE 36,
wherein each of the multiple edge-deployed processors is operated in accordance with the method of any one of EXAMPLEs 1 to 35.

EXAMPLE 38. A processor configured to execute the method of any one of EXAMPLEs 1 to 35.

EXAMPLE 39. A central server configured to execute the method of EXAMPLE 36.

EXAMPLE 40. A system comprising the processor of EXAMPLE 38 and the central server of EXAMPLE 39.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above various examples have been disclosed according to which feature relevance values and feature relevance vectors are determined using Shapley methods. In other examples, other XAI methods can be employed such as LIME.

For further illustration, above various examples have been disclosed in which a radar sensor is used for making measurements that enable to infer the gesture class prediction. Similarly, other types of depth sensors can be used. Examples include, e.g., optical ToF sensors using (such as ToF cameras, ToF LIDAR sensors, or direct or indirect ToF sensors). Optical ToF sensors - similar to radar sensors which us radio waves - can provide information regarding the distance to an object, i.e., a feature associated with "range". Further types of depth sensors include stereo cameras and ultrasonic sensors.

For still further illustration, it would even be possible to rely on other sensor types than depth sensors. In particular, sensors can be used that enable to determine human-understandable features such that feature relevance values associated with corresponding feature values can be indicated to the user, e.g., as part of a re-training process where re-training the ML model and/or as part of a guided and interactive user training process. An example would be a capacitive sensor, e.g., integrated into a display that can provide features such as "touch pressure" and "touch position". Also, such capacitive sensors are often used to detect gestures executed on top of the display, e.g., in continuous interaction with a graphical user interface.

**Claims**

1. A method of operating an edge-deployed processor (62), the method comprising:

   - obtaining (3010) at least one feature vector that encodes measurement data (64) provided by a depth sensor (70) for a gesture (501-510) executed by a user,
   - using a machine-learning model (121), inferring (3015), from the at least one the feature vector, a gesture class prediction associated with the gesture,
   - determining (3020) at least one feature relevance vector for the at least one feature vector, each of the at least one feature relevance vector comprising feature relevance values, each of the feature relevance values being indicative of a dependency of the gesture class prediction on respective one or more feature values of the at least one feature vector,
   - determining (3035) a user output associated with the gesture based on the at least one feature relevance vector, and
   - controlling (3040) a user interface to provide the user output to the user.

2. The method of claim 1, further comprising:

   - classifying the gesture as anomalous or non-anomalous,

   wherein the user output is selectively provided to the user responsive to classifying the gesture as anomalous.

3. The method of claim 2,
   wherein said classifying of the gesture as anomalous or non-anomalous is based on the at least one feature relevance vector.

**4.** The method of claim 2 or 3
wherein said classifying of the gesture as anomalous or non-anomalous is based on an uncertainty measure associated with said inferring of the gesture class prediction using the machine-learning model.

**5.** The method of any one of claims 2 to 4,
wherein said classifying of the gesture as anomalous or non-anomalous is based on a distance of the at least one feature vector to one or more predefined reference feature vectors.

**6.** The method of any one of claims 2 to 5,
wherein said classifying of the gesture as anomalous or non-anomalous is based on a threshold comparison between each of the feature values of the at least one feature vector and respective thresholds.

**7.** The method of any one of the preceding claims,
wherein the user output is provided to the user as part of a re-training process for populating a training dataset for re-training the machine-learning model.

**8.** The method of any one of the preceding claims, further comprising:

- controlling the user interface to obtain a user input associated with the user output,
- based on the user input, selectively including the at least one feature vector in a training dataset, and
- re-training the machine-learning model based on the training dataset, to thereby obtain the machine-learning model.

**9.** The method of claim 8, further comprising:

- providing (3130) an uplink message to a central server (139), the uplink message being indicative of weights (122) of the machine-learning model upon completing said re-training.

**10.** The method of any one of the preceding claims,
wherein the user output is indicative of one or more feature values of the at least one feature vector that are associated with feature relevance values that deviate from a predefined reference and/or exceed or fall below a predefined threshold.

**11.** The method of claim 10,
wherein the predefined reference and/or the predefined threshold are determined based on previously determined feature relevance vectors.

**12.** The method of any one of the preceding claims,
wherein the at least one feature vector comprises feature values in one or more of the following dimensions:

range of a gesture object; velocity of the gesture object;
angular orientation of the gesture object; azimuthal angle of the gesture object; and elevation angle of the gesture object.

**13.** The method of any one of the preceding claims, further comprising:

- obtaining (3110), from a central server (139), a downlink message indicative of weights of the machine-learning model prior to said inferring.

**14.** A method of operating a central server (139), the method comprising:

- obtaining, from each of multiple edge-deployed processors, respective uplink messages, each of the uplink messages being indicative of respective weights of a machine-learning model, the machine-learning model being used, at the edge-deployed processors, to infer gesture class predictions from feature vectors that represent measurement data obtained from depth sensors,
- consolidating the weights, to determine updated weights of the machine-learning model, and
- providing, to at least one of the multiple edge-deployed processors, a respective downlink message indicative of the updated weights of the machine-learning model.

**15.** The method of claim 14,
wherein each of the multiple edge-deployed processors is operated in accordance with the method of any one of claims 1 to 13.

# FIG. 1

65

| | |
|---|---|
| Radar sensor | 70 |

64

| | |
|---|---|
| IF | 61 |

60

| | | | |
|---|---|---|---|
| CPU | 62 | MEM | 63 |

# FIG. 2

FIG. 3

501 — left-right
502 — right-left
503 — top-down
504 — down-top
505 — circle clockwise

506 — circle anticlockwise
507 — forward
508 — backward
509 — finger-wave
510 — finger-rub

520

# FIG. 4

# FIG. 5

```
        ┌─────────────────────────────────────────────────────┐
        │                                                     │
        ▼                                                     │
    ◇ 3005                                                    │
  NEW GESTURE?                                                │
        │ YES                                                 │
        ▼                                                     │
  OBTAIN AT LEAST ONE          ─ 3010                         │
  FEATURE VECTOR                                              │
        │                                                     │
        ▼                                                     │
  INFER GESTURE CLASS          ─ 3015                         │
  PREDICTION USE ML MODEL                                     │
        │                                                     │
        ▼                          ADAPT THRESHOLDS          │
  DETERMINE FEATURE     ─ 3020     AND/OR REFERENCES          │
  RELEVANCE VECTOR(S)          3032 ─                         │
        │                                                     │
        ▼                ─ 3025    IMPLEMENT USE CASE         │
  CLASSIFY GESTURE                                            │
  ANOMALOUS / NON-ANOMALOUS   3031 ─                          │
        │                                                     │
        ▼ 3030              NO                                │
  ◇ GESTURE ANOMALOUS? ─────────────────────────────────────┘
        │ YES
        ▼
  DETERMINE USER OUTPUT        ─ 3035
        │
        ▼
  CONTROL UI TO                ─ 3040
  PROVIDE USER OUTPUT
        │
        ▼
  CONTROL UI TO                ─ 3045
  OBTAIN USER INPUT
        │
        ▼ 3050
  ◇ GESTURE ACCEPTABLE?  NO ──→
        │ YES
        ▼
  INCLUDE TRAINING DATA        ─ 3055
```

**FIG. 6**

**FIG. 7**

# FIG. 8

```
              ┌──────────────────────────────┐
   NO ◄───────┤           UPDATE?            │── 3105
              └──────────────┬───────────────┘
                            │ YES
                            ▼
              ┌──────────────────────────────┐
              │      OBTAIN DL MESSAGE        │── 3110
              └──────────────┬───────────────┘
                            ▼
         ┌─────────────────────────────────────┐
         │ ┌─────────────────────────────────┐ │
         │ │  USE CURRENT VERSION OF         │ │── 3111
         │ │  MODEL FOR INFERENCE            │ │
         │ └──────────────┬──────────────────┘ │
         │                ▼                     │
         │ ┌─────────────────────────────────┐ │
   NO ◄──┤ │         RE-TRAINING?            │ │── 3115
         │ └──────────────┬──────────────────┘ │
         │               │ YES                 │
         │               ▼                     │
         │ ┌─────────────────────────────────┐ │
         │ │   AUGMENT TRAINING DATASET      │ │── 3120
         │ └──────────────┬──────────────────┘ │
         │                ▼                     │
         │ ┌─────────────────────────────────┐ │
         │ │     RE-TRAINING ML MODEL        │ │── 3125
         │ └──────────────┬──────────────────┘ │
         │                ▼                     │
         │ ┌─────────────────────────────────┐ │
         │ │      PROVIDE UL MESSAGE         │ │── 3130
         │ └──────────────┬──────────────────┘ │
         └────────────────┴────────────────────┘
```

# FIG. 9

INITIAL TRAINING — 3205

PROVIDE DL MESSAGES — 3210

OBTAIN UL MESSAGES — 3215

3226

CONSOLIDATE WEIGHTS — 3220

PROVIDE DL MESSAGES — 3225

# FIG. 10

**Input:** clients with weights and dataset $\mathbf{L} = \{l_1, ..., l_N\}$, server $l_S$ with weights $w$ and dataset $D$
where $l_i = (w_i, D_i)$ and $D_i = \{(x_1, y_1), ..., (x_M, y_M)\}$ with data sample $x_i$ and label $y_i$

**Main():**
**SelectedFeatures** $\leftarrow$ **EvaluateFeatureImportance**($l_s$)
$l_s \leftarrow$ **PretrainModel**($l_s$)
**for** after each time interval **do**
    $l_s \leftarrow$ **RunServer**($\mathbf{L}$, $l_s$)
    $\mathbf{L}, l_s \leftarrow$ **RunSensorinCars**($\mathbf{L}, l_s$)
**end for**
**RunSensorinCars**($\mathbf{L}, l_s$):
$\mathbf{L_0 = L}$
**for** each client $l_i$ in $\mathbf{L}$ **do**
    $D_i \leftarrow$ **CollectData**($D_i$)
    $w_i \leftarrow$ **UpdateAgent**($w_s, D_i$)
    $l_i = (w_i, D_i)$
**end for**
**if** Sharing is on **then**
    $w_{avg} \leftarrow \frac{1}{|L|} \sum_{a=1}^{|L|} w_a$
    $l_s = (w_{avg}, D_s)$
    **return** $\mathbf{L}, l_s$
**else**
    **return** $\mathbf{L_0}, l_s$
**end if**
**EvaluateFeatureImportance**($l_s$):
$w_s \leftarrow$ **UpdateAgent**($w_s, D_s$)
**FeatureImportanceRanking** $\leftarrow$ **SHAP**($w_s, D_s$)
**SelectedFeatures** $\leftarrow$ **FeatureSelection**(**FeatureImportanceRanking**)
**return SelectedFeatures**
**PretrainModel**($l_s$):
$w_s \leftarrow$ **UpdateAgent**($w_s, D_s$)
$l_s = (w_s, D_s)$
**return** $l_s$
**RunServer**($\mathbf{L}, l_s$):
Initialize weights $w_{avg}^1 = w_s$
**for** each round $i = 1$ to $R$ **do**
    $w_S^{r+1} \leftarrow$ **UpdateAgent**($w_{avg}^r, D_S$)
    $\mathcal{L}^r \leftarrow$ (select random $A$ clients from $\mathcal{L}$)
    **for** each client $l_a^r \in \mathbf{L}$ **do**
        $w_a^r \leftarrow$ **UpdateAgent**($w_S^{r+1}, D_a$)
    **end for**
    $w_{avg}^{r+1} \leftarrow \frac{1}{A} \sum_{a=1}^{A} w_a^r$
**end for**
**return** $l_s = (w_{avg}^R, D_s)$
**UpdateAgent**($w, D$):
**for** each local epoch **do**
    $\mathcal{L} = \mathcal{L}_S$
    $w \leftarrow w - \eta \nabla \mathcal{L}$
**end for**
**return** $w$
**CollectData**($D$):
$D \leftarrow \{(x_1, y_1), ..., (x_M, y_M)\}$
**return** $D$

# FIG. 11

# FIG. 12

**FIG. 13**

**EUROPEAN SEARCH REPORT**

Application Number

EP 23 20 3859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCCLEARY JAMES ET AL: "Sign Language Recognition using micro-Doppler and Explainable Deep Learning", 2021 IEEE RADAR CONFERENCE (RADARCONF21), IEEE, 7 May 2021 (2021-05-07), pages 1-6, XP033925868, DOI: 10.1109/RADARCONF2147009.2021.9455257 * figures 3, 4, 5 * * Page 5, section Results * | 1,12 | INV. G06F3/01 G06N5/045 G06N20/00 |
| E | EP 4 310 738 A1 (INFINEON TECHNOLOGIES AG [DE]) 24 January 2024 (2024-01-24) * the whole document * | 1-4 | |
| X | KITAMURA YOSHIFUMI ET AL: "mTSeer: Interactive Visual Exploration of Models on Multivariate Time-series Forecast", PROCEEDINGS OF THE 2021 CHI CONFERENCE ON HUMAN FACTORS IN COMPUTING SYSTEMS, 8 May 2021 (2021-05-08), pages 1-15, XP093016198, New York, NY, USA DOI: 10.1145/3411764.3445083 ISBN: 978-1-4503-8096-6 Retrieved from the Internet: URL:https://dl.acm.org/doi/pdf/10.1145/3411764.3445083> * Section 5.6 Interactions; figures 3, 4, 5 * | 1-6,10, 11 | |

TECHNICAL FIELDS SEARCHED (IPC)

G06F
G06N

-/--

The present search report has been drawn up for all claims

| Place of search | Date of completion of the search | Examiner |
|---|---|---|
| Munich | 22 March 2024 | Marinov, Ivan |

EPO FORM 1503 03.82 (P04C01)

Europäisches Patentamt

European Patent Office

Office européen des brevets

# EUROPEAN SEARCH REPORT

**Application Number**

EP 23 20 3859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MROZ PAWEL ET AL: "GBEx: towards graph-based explanations", 2020 IEEE 32ND INTERNATIONAL CONFERENCE ON TOOLS WITH ARTIFICIAL INTELLIGENCE (ICTAI), 9 November 2020 (2020-11-09), pages 112-117, XP093020820, DOI: 10.1109/ICTAI50040.2020.00028 Retrieved from the Internet: URL:https://ieeexplore.ieee.org/stampPDF/getPDF.jsp?tp=&arnumber=9288249&ref=aHR0cHM6Ly9pZWVleHBsb3JlLmllZWUub3JnL2Fic3RyYWN0RvY3VtZW50Lzky0DgyNDk=> * figure 1 * | 1 | |
| X | US 2021/390457 A1 (ROMANOWSKY MARK BENJAMIN [US] ET AL) 16 December 2021 (2021-12-16) * paragraphs [0007], [0008], [0076], [0077]; figure 10 * * paragraph [0083] - paragraph [0092] * | 1,7,8 | |
| | | | **TECHNICAL FIELDS SEARCHED (IPC)** |

The present search report has been drawn up for all claims

| Place of search | Date of completion of the search | Examiner |
|---|---|---|
| Munich | 22 March 2024 | Marinov, Ivan |

EPO FORM 1503 03.82 (P04C01)

Europäisches
Patentamt

European
Patent Office

Office européen
des brevets

**Application Number**

EP 23 20 3859

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8(completely); 10-12(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 23 20 3859

The Search Division considers that the present European patent application does not comply with the requirements of unity of invention and relates to several inventions or groups of inventions, namely:

    1. claims: 1-8(completely); 10-12(partially)

        Providing user feedback in an machine learning model with explainable artificial intelligence methods
                ---

    2. claims: 9, 13-15(completely); 10-12(partially)

        Federated learning in machine learning
                ---

## ANNEX TO THE EUROPEAN SEARCH REPORT
## ON EUROPEAN PATENT APPLICATION NO.

EP 23 20 3859

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | | Publication date | Patent family member(s) | | Publication date |
|---|---|---|---|---|---|
| EP 4310738 | A1 | 24-01-2024 | CN | 117434507 A | 23-01-2024 |
| | | | EP | 4310738 A1 | 24-01-2024 |
| | | | US | 2024028962 A1 | 25-01-2024 |
| US 2021390457 | A1 | 16-12-2021 | US | 2021390457 A1 | 16-12-2021 |
| | | | WO | 2021257395 A1 | 23-12-2021 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LUNDBERG, SCOTT M.** ; **SU-IN LEE**. A unified approach to interpreting model predictions. *Advances in neural information processing systems*, 2017, vol. 30
- **RIBEIRO, MARCO TULIO** ; **SAMEER SINGH** ; **CARLOS GUESTRIN**. Why should i trust you?'' Explaining the predictions of any classifier. *Proceedings of the 22nd ACM SIGKDD international conference on knowledge discovery and data mining*, 2016

- **SHAPLEY, LLOYD S.** *A value for n-person games*, 1953, 307-317
- **SENSOY, MURAT** ; **LANCE KAPLAN** ; **MELIH KANDEMIR**. Evidential deep learning to quantify classification uncertainty. *Advances in neural information processing systems*, 2018, vol. 31